Europäisches Patentamt

European Patent Office

Office européen des brevets

(11) Publication number: **0 076 352**
**A2**

(12) **EUROPEAN PATENT APPLICATION**

(21) Application number: **81830231.7**

(22) Date of filing: **20.11.81**

(51) Int. Cl.³: **G 11 B 1/02**

(30) Priority: **05.10.81 IT 2432181**

(43) Date of publication of application:
**13.04.83 Bulletin 83/15**

(84) Designated Contracting States:
**BE DE FR GB NL**

(71) Applicant: **MDA S.r.l.**
**Via San Giuseppe, 137**
**I-21047 Saronno(IT)**

(72) Inventor: **Macchi, Roberto**
**Piazza De Gasperi, 17**
**Saronno(IT)**

(74) Representative: **Monti, Umberto et al,**
**c/o SOCIETà ITALIANA BREVETTI S.p.A. Via Carducci 8**
**I-20123 Milano(IT)**

(54) A modular holder for two-dimensional elements.

㉗ A holder for substantially two-dimensional elements such as floppy disks, phonograph records, cards and the like comprising a case or main body (1) in which an extractable supporting structure (2) enclosing a plurality of such two-dimensional elements is housed. The supporting structure (2) includes a frame portion or base (4) restrained to the main body (1) and a holding portion or basket (3) for the two-dimensional elements that can accomplish at least an angular displacement with respect to the base in order to allow an easy visual check of the two-dimensional elements without extracting them from the holder. The holders are furthermore provided with side members (9) for the connection to other adjacent holders so as to form a "library" arrangement having minimal transverse dimensions. The rotation of the basket after that the supporting structure (2) has been extracted allows for a quick and easy inspection of the content of one or more baskets without substantially increasing the dimensions of the library.

Fig. 2

"A modular holder for two-dimensional elements"

The present invention relates to a modular holder for flat or substantially two-dimensional elements such as floppy disks, phonograph records, cards and the like. The holder allows the restrained extraction of a supporting structure wherein a plurality of such elements is housed and at least their subsequent rotation with respect to the holder for visual inspection without really extracting the elements and without substantially increasing the dimensions of a "library" formed by several adjacent and interconnected holders.

Many information carriers, in a broad sense, such as data storing discs known as floppy disks, phonograph records, video discs, file cards etc., are substantially flat or two-dimensional elements to be housed in suitable cases when not in use both to protect them and to allow an easy retrieval of a desired element. Whereas cards have already a square or rectangular shape, discs are usually stored in suitable rectangular envelopes made by paper or board. Therefore all such elements are handled as substantially rectangular flat bodies or sheets. The most immediate way of storing these elements provides for parallelepipedal containers wherein a plurality of elements is housed.

While this solution allows a storage with reduced dimensions it is of disadvantage when it is necessary

to visually inspect or select a particular element to be extracted. As a matter of fact the known containers are designed to be disposed adjacently, and in case connected together, so as to occupy a minimum of space, but when the user wants to select a particular element he has to extract all the contained pieces to be able to read the indications written thereon. The inconvenience is rather serious when file reference is very frequent and implies therefore an additional space where to set out the elements while examinating them, a waste of time for extracting, selecting and reintroducing the elements, a chance of error when reintroducing the elements. In data processing systems wherein the elements to be retrieved are floppy disks, the inconvenience of space is particularly felt since the trend is to compact the library formed by the disks in a minimum of space and to dispose it near the machine they are to be used with, but in view of the high frequency of consulting and selecting the material an additional consulting board or space is required that substantially increases the size of the library.

For sake of simplicity the following description will refer to modular holders for floppy disks but it is to be understood that the holder of the invention can be employed for any substantially two-dimensional elements requiring a storage.

It is an object of the present invention to realize a holder of modular type for elements substantially two-dimensional or flat that provides for an easy selection of the elements without appreciably increasing the dimensions of a library built up by a plurality of such holders placed side by side.

It is another object of the invention to realize a holder of the above mentioned type that allows for a restrained extraction of a plurality of such elements and, at least, their rotation with respect to the plane of extraction in order to read the content of the elements without materially extracting them from the holder.

These and further characteristics of the invention, together with the relevant advantages will be evident from the following description of some preferred but not limited embodiments, reference being made to the attached drawings in which:

FIGURES 1 and 2 are perspective views showing the holder of the invention and its working;

FIGURES 3 and 4 are a side view and a front view of the main body, respectively;

FIGURE 5 is a plant view of the basket that retains the elements;

FIGURE 6 is a cross-section of the basket along line A-A of Fig. 5;

FIGURE 7 is a plant view of the base;

FIGURE 8 is a cross-section of the base portion of Fig. 7 along line B-B;

FIGURE 9 and 10 illustrates some details of the pivot means;

FIGURE 11 schematicaly illustrates the modular joining of a plurality of holders; and

FIGURE 12 illustrates an alternative embodiment of the holder according to the invention.

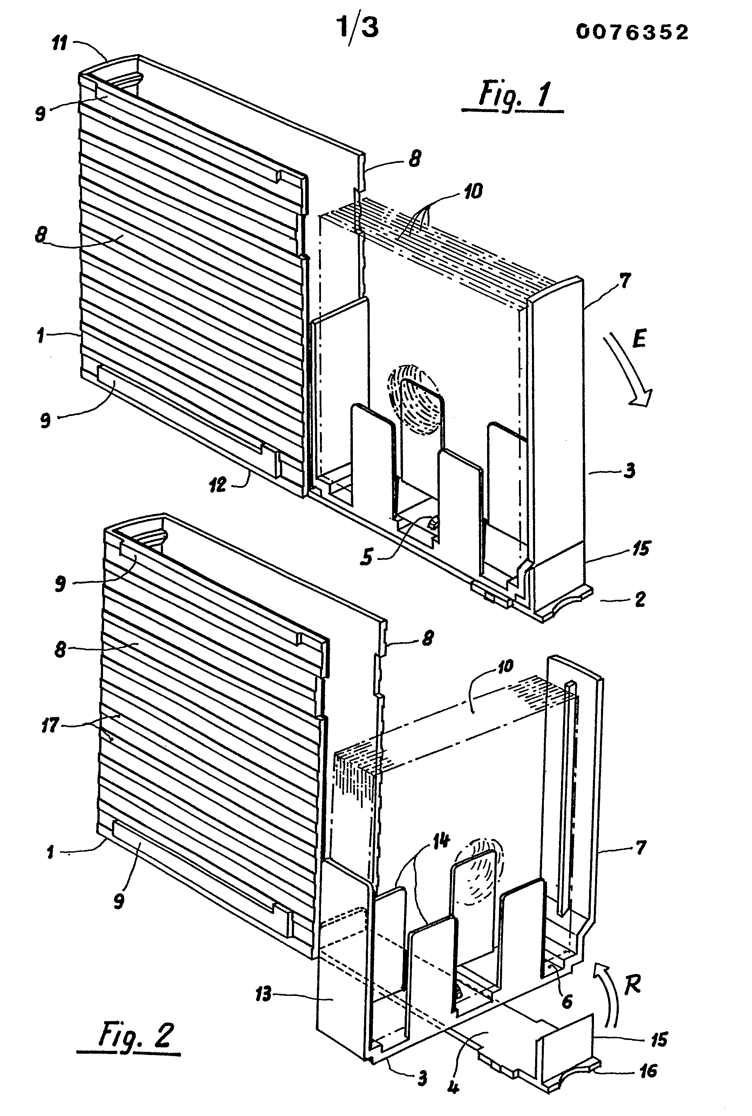

Referring now to the figures, and particularly to Figs. 1 and 2 for the working, there will be illustrated the features of the holder of the invention and its use. The holder of the invention comprises a main body or case 1 in form of a flat box-like housing deprived of two adjacent faces corresponding to narrow or back faces. It is therefore formed by two side parallel extending faces 8, 8, a back portion 11 and a bottom portion 12. Within the main body a supporting structure 2 is housed that contains disks 10 and is joined to the main body at one of its corner edges by a pin 28 in order to allow its extraction through an angular movement of 90° as shown by arrow E. The supporting structure is formed by a frame portion or base 4 pivotally connected to the main body and forming the front closure of the holder, and by a holding portion or basket 3 accomplishing a top closure of the holder by means of a part. 7 when the holder is not in use. Basket 3 comprises a base strip 6 having substantially the same sizes of base 4, two strips, respectively 7 and 13, perpendicularly rising from the ends of the base and a plurality of holding tabs 14. Strip 7 realizes the top closure of main body when the holder is not in use whereas strip 13 having lower height, cooperates with tabs 14 to hold disks 10 placed in the basket. Base strip 6 is connected to base 4 by pivot means 5 allowing a rotation of at least 90° with respect to portion 4. At the end opposed to the pivoted one, portion 4 terminates with a projection 15 perpendicular to the base and having a rib 16 wherein a recess is formed. Projection 15 engages strip 7 thanks to a slight elastic deformation to prevent accidental rotations of the basket upon extracting or reintroducing the supporting structure whereas rib 16 allows an easy extraction of the movable portions by the user.

On side walls 8 of the main body there are provided reinforcing ribs 17 and two additional joint ribs 9 for linking together a number of adjacent holders.

The use of the holder of the invention will now be clear. Disks 10, retained in basket 3 are in the main body. Introducing a finger into the recess of rib 16 and levering one obtains a rotation of 90° as shown by arrow E positioning supporting structure 2 as illustrated in Fig. 1. Then, by applying a moderate lateral pressure, the basket can be disengaged from projection 15 and rotated by about 90° so as to position the disks as shown in Fig. 2. Thus the user can inspect the disks reading their content marked on the upper portions and select the desired one without having to move himself aside to read the remarks and without any interference with the adjacent holders. Furtheremore the disks are not removed from the basket so avoiding possible damages of the same and most of all, on alteration of the order with which they are placed in the holder. The rotation of the basket can be of 90° as shown in the figure or less, according to the user's need and in case to the necessity of inspecting the content of two or more holders.

The basket and base surfaces that are in contact during the rotation can be properly roughed to prevent free rotations of the basket and simultaneously to realize a sort of stop in the desired position. Alternatively such surfaces can be formed with engaging pawls that define predetermined rotation angles and act as stop members in the desired position.

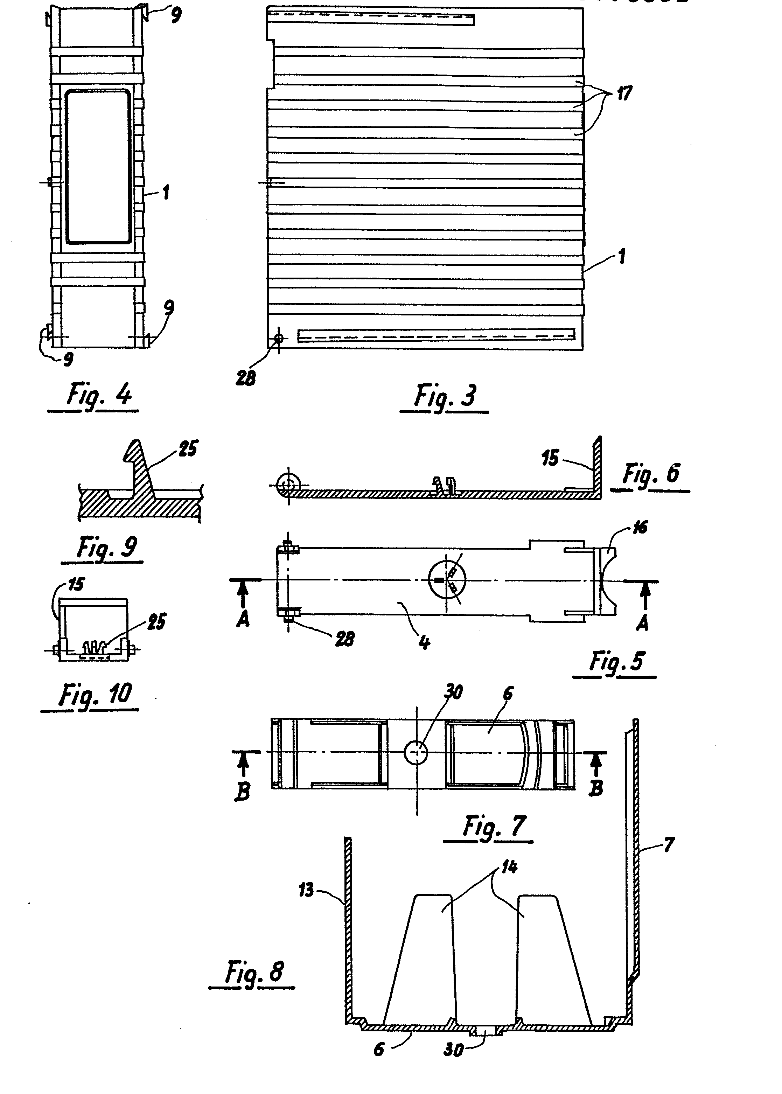

In Figs. 5 to 10 the base of the supporting structure is illustrated together with details of the pivot means. It is preferable that all the parts are of a plastic material, e.g. shock resistant polystyrene, and formed by molding. According to a preferred embodiment the bottom of the basket has a hole 30 for engaging elastic protruding teeth 25 directly formed when molding the base element. Once such teeth have been introduced into hole 30 with a temporary deformation, they allow for the basket to rotate with respect to the base.

Tabs 14 retaining the disks can be subsequently mounted by joints thereby making simpler the molding of the basket.

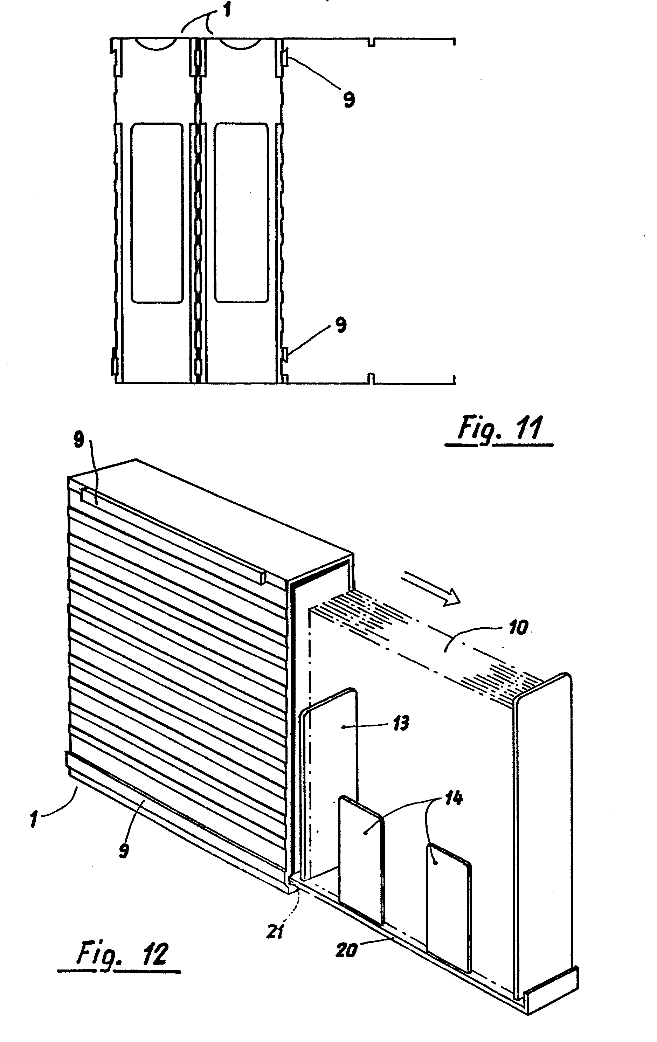

Fig. 11 schematically shows the arrangement of two holders placed side by side. The longitudinal cross-sections of ribs 9 are such to form slide guides for laterally engaging several holders placed side by side. Thus it is obtained a compact structure that can be dismounted, if desired, by extracting one or more holders until the selected one is free.

The holder illustrated in Figs. 1 to 10 is preferred but it is not the only possible embodiment. As shown in Fig. 12 the extraction of the supporting structure can be realized with a linear movement, similar to that for opening a drawer, thanks to longitudinal guides 21 of main body 1 into which the edges 20 of the base slide. This way pin 28 is eliminated and replaced by side stops (not shown for clearness) on edges 20. The supporting structure will be suitably stronger to prevent inflections and main body 1 will take the form of a case missing of one face only.

According to another embodiment that can be used with a holder having either a rotating extraction or a sliding extraction, the center of rotation between the basket and the base can be a movable point. For example pivot means 25 can be replaced by a pin protruding from the base and provided with a head engaging a longitudinal slot of base strip 6 of the basket. Then the rotation can take place after positioning the basket more advanced with respect to the position of the base after the extraction.

The above and other obvious modifications that anyhow provides for combining an extraction movement of the supporting structure in a vertical plane with a relative movement of rotation and/or translation of the basket are to be considered as coming within the scope of the invention. Moreover the invention extends to cover the obvious changes and/or modifications that can be provided, for any reason, for the components of the holder, as well as to the means for obtaining the movements.

CLAIMS

1. A holder for elements that are substantially two-dimensional, comprising a main body (1) wherein an extractable supporting structure (2) is housed, the supporting structure containing a plurality of said two-dimensional elements (10), characterized in that said supporting structure (2) includes a holding portion or basket (3) and a frame portion or base (4), said portions being connected together by means (5) adapted to allow at least a relative rotation between the basket (3) and the base (4) after that the supporting structure has been extracted so as to allow a selection of the elements (10) without materially extracting them; and characterized in that the side walls (8) of the main body (1) are externally provided with members (9) for the modular linking with other adjacent holders.

2. A holder for elements that are substantially two-dimensional such as floppy disks, phonograph records, cards and alike as claimed in claim 1 characterized in that the supporting structure (2) is joined to the main body (1) by sliding means (20, 21) provided with stops so that said supporting structure is extractable through a translatory movement.

3. A holder for elements that are substantially two-dimensional such as floppy disks, phonograph records, cards and alike as claimed in claim 1 characterized in that the supporting structure (2) is restrained to the main body by pivot means (28) so that it is extractable through a rotation movement.

4. A holder as claimed in claim 2 or 3 characterized in that the basket (3) is pivotally connected to the base (4) so that it can rotate about a prefixed axis.

5. A holder as claimed in claim 2 or 3 characterized in that the basket (3) is constrained to the base by means of a pin movable in a slot of the base (4) so that the basket (3) can accomplish a combined movement of translation and rotation with respect to the base after that the supporting structure (2) had been extracted from the main body (1).

6. A holder as claimed in claim 4 or 5 characterized in that the main body is a plastic case having a flat box-like shape missing of two consecutive faces and that the base of the supporting structure (2) is formed by a first plastic closure strip (4) having the sizes of one of the missing faces and is pivoted at one edge (28) to the main body (1) near a corner, said base (4) being further provided with elastic members (25) protruding near its center and cooperating to form a pivot, and in that the basket (3) is formed by a plastic base strip (6) having a hole (30) to engage said elastic members (25), and a second plastic closure strip (7) perpendicularly rising from the base strip (6) having the sizes of the other missing face.

7. A holder as claimed in claim 6 characterized in that the base strip (6) is provided with a further strip (13) perpendicularly rising from the base strip that cooperateswith the second closure strip (7) and with a number of tabs (14) projecting from said base strip to retain the elements (10) in the basket; and in that the closure strip forming the base (4) is provided on the part opposite to the one pivoted to the main body, with a projection (15) for engaging the second closure strip (7) and with a rib (16) having a recess to facilitate the extraction of the supporting structure (2) from the main body (1).

0076352

*Fig. 1*

*Fig. 2*

0076352

**Fig. 4**

**Fig. 3**

**Fig. 9**

**Fig. 6**

**Fig. 10**

**Fig. 5**

**Fig. 7**

**Fig. 8**

0076352

_Fig. 11_

_Fig. 12_